# EUROPEAN PATENT SPECIFICATION

(11) **EP 3 032 916 B1**
(45) Date of publication and mention of the grant of the patent: **18.09.2019**
(21) Application number: 14835404.6
(22) Date of filing: 05.08.2014
(51) Int. Cl.: H04W 8/00, H04W 28/18, H04W 92/20, H04W 36/08, H04W 36/30

(54) **TRANSMISSION OF D2D DISCOVERY SIGNALS FOR TERMINALS AT CELL EDGE**
ÜBERTRAGUNG VON D2D ENTDECKUNGSIGNALEN FÜR GERÄTE AM RAND EINES ZELLES
TRANSMISSION DE SIGNAUX DE DÉCOUVERTE D2D POUR DES TERMINAUX EN BORDURE DE CELLULE

(30) Priority: 08.08.2013 JP 2013165479
(43) Date of publication of application: 15.06.2016
(73) Proprietor: NTT DOCOMO, INC., Chiyoda-ku Tokyo 100-6150 (JP)
(72) Inventor: NAGATA, Satoshi, Tokyo 100-6150 (JP); ZHAO, Qun, Haidian District Beijing 100190 (CN); ZHANG, Yongsheng, Haidian District Beijing 100190 (CN); KUSUME, Katsutoshi, 80687 Munich (DE)
(74) Representative: Hoffmann Eitle
(86) International application number: PCT/JP2014/070569
(87) International publication number: WO 2015/020027

(56) References cited:
- WO-A1-2011/063845
- WO-A1-2011/130630
- WO-A1-2013/002206
- JP-A- 2005 318 405
- JP-A- 2005 318 405
- US-A1- 2012 250 531
- QUALCOMM INCORPORATED: "Techniques for D2D Discovery", 3GPP DRAFT; R1-132503 TECHNIQUES FOR D2D DISCOVERY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Fukuoka, Japan; 20130520 - 20130524 11 May 2013 (2013-05-11), XP050698221, Retrieved from the Internet: URL:http://www.3gpp.org/ftp/tsg_ran/WG1_RL 1/TSGR1_73/Docs/ [retrieved on 2013-05-11]
- NTT DOCOMO ET AL: "Views on D2D discovery resource allocation", 3GPP DRAFT; R1-140630 VIEWS ON D2D DISCOVERY RESOURCE ALLOCATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANC , vol. RAN WG1, no. Prague, Czech Republic; 20130210 - 20130214 10 February 2013 (2013-02-10), XP050752154, Retrieved from the Internet: URL:http://www.3gpp.org/ftp/tsg_ran/WG1_RL 1/TSGR1_76/Docs/ [retrieved on 2014-02-01]

## Description

### TECHNICAL FIELD

The present invention relates to terminal-to-terminal (D2D) communication. More particularly, the present invention relates to a technique for, when a terminal (to be referred to as user apparatus UE hereinafter) moves, controlling the user apparatus UE to behave properly.

### BACKGROUND ART

In a mobile communication system, it is common that a user apparatus UE and a base station eNB performs communication so that communication is performed between user apparatuses UE. However, in recent years, various techniques are considered for D2D communication (to be also referred to as device-to-device communication) for performing direct communication between user apparatuses UE.

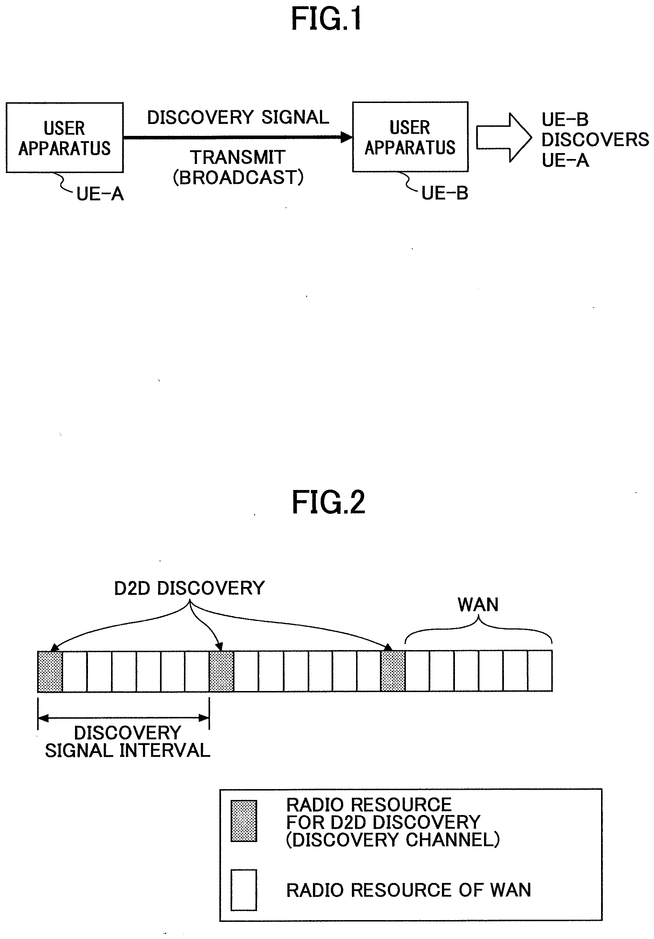

When performing communication between user apparatuses UE, it is necessary that a user apparatus UE discovers another neighboring user apparatus UE. As a method for discovering a user apparatus UE, there is a method in which each user apparatus UE transmits (broadcasts) a discovery signal including its own ID (identification information). For example, as shown in Fig. 1, in a case where a user apparatus UE-A transmits a discovery signal including its identification information, and a user apparatus UE-B receives the discovery signal, the user apparatus UE-B discovers the user apparatus UE-A by determining that there is identification information of the user apparatus UE-A in the discovery signal.

Fig. 2 is a diagram showing an example of a radio resource (to be referred to as "resource" hereinafter) for transmitting a discovery signal. In the example of Fig. 2, it is defined that a discovery resource (example: discovery subframe), for performing discovery (and being discovered) of a user apparatus UE by transmitting and receiving a discovery signal, comes periodically. As shown in Fig. 2, a time length between a period (to be also referred to as discovery period) for transmitting and receiving a discovery signal and a next discovery period is called a discovery signal interval. Such a discovery resource is assigned, for example, by a base station eNB of a radio access network (RAN) with which the user apparatus UE is synchronized, so that the user apparatus UE performs transmission and reception of a discovery signal by using the discovery resource at the discovery signal intervals.

In the resource of each discovery period, there are a plurality of blocks (block of time frequency resource). Each user apparatus UE performs transmission of a discovery signal by selecting a block from among the plurality of blocks, and receives a discovery signal in a block, for example. In Fig. 2, parts other than the discovery period are used for normal communication via a base station eNB.

JP 2005 318405 A relates to the problem of reusing packet losses at the time of cell switching while suppressing an increase in processing load of a mobile station apparatus. As a solution, this document describes a reception SIR measuring part 102 measuring a reception SIR (SIRM) of a connection cell. An edge detecting part 103 and a cell switch position detecting part 104 detect that the mobile station apparatus (MS) 100 is in the cell edge zone of the connection cell and that the MS 100 is in a cell switching zone from the connection cell to other cells, by comparing the SIRM with thresholds TH1 and TH2 respectively. An FFT timing detecting part 108 detects an FFT window timing of other cells when it is detected that the MS 100 is in the cell edge zone. When it is detected that the MS 100 is in the cell switching zone, the cell switching part 105 switches the connection cell to other cells according to the FFT window timing detected by the FFT timing detecting part 108.

In US 2012/178488 A1, a dynamic wireless network discovery system, apparatus and method are provided for users of wireless device to find, connect to, and use wireless networks in an automated manner.

### RELATED ART DOCUMENT

### [PATENT DOCUMENT]

[PATENT DOCUMENT 1] JP2013-034165

### SUMMARY OF THE INVENTION

### PROBLEM TO BE SOLVED BY THE INVENTION

In the above-mentioned D2D communication, the timing at which the user apparatus UE transmits a discovery signal is determined based on a synchronization signal (synchronization reference, a signal that becomes a reference of synchronization) which the user apparatus UE receives. The synchronization signal may be received from a base station eNB, or may be received from another apparatus. For example, each user apparatus UE establishes synchronization based on a synchronization signal received from a connecting cell (serving cell) to perform D2D communication.

The user apparatus UE may receive a plurality of synchronization signals. For example, when the user apparatus UE is located at a cell edge, there is a case where the user apparatus UE can receive a synchronization signal from a neighbor cell in addition to a synchronization signal from a connecting cell. In such a cellular environment, when the user apparatus UE moves, it is necessary that the user apparatus UE can select a proper synchronization signal to switch to the proper synchronization signal.

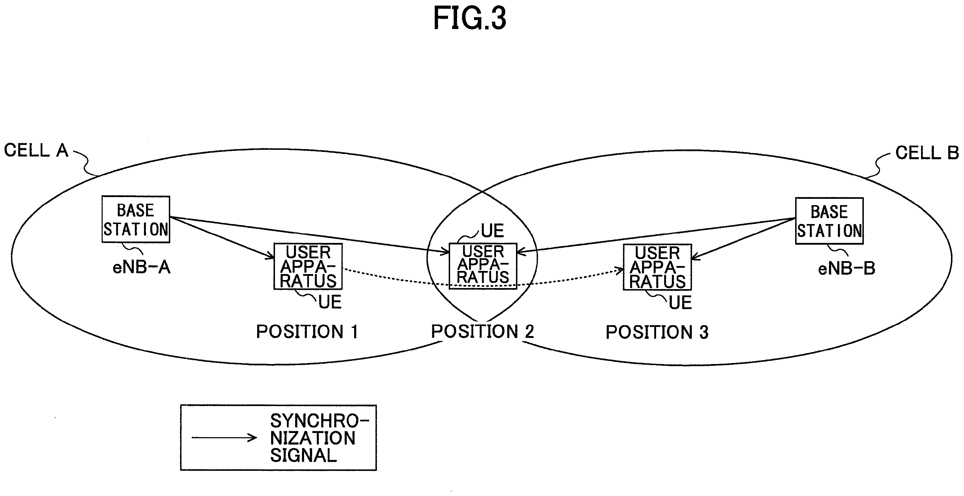

For example, a situation shown in Fig. 3 is considered. Fig. 3 shows that a user apparatus UE moves, as shown in the figure, in a cellular environment where there are a base station eNB-A (cell A) and a base station eNB-B (cell B). As shown in Fig. 3, the user apparatus UE initially exists at a position 1, and at that time, the user apparatus UE receives a synchronization signal from the base station eNB-A. The user apparatus moves so as to reach a position 3 finally. At this time, the user apparatus UE receives a synchronization signal from the base station eNB-B. During that move, at a position 2, there is a possibility that the user apparatus UE can receive synchronization signals from both of the base station eNB-A and the base station eNB-B.

In an inter-cell asynchronous radio communication system, a plurality of synchronization signals received from different cells (base stations eNB) are also asynchronous. Therefore, in a case where the user apparatus UE exists in the position 2 shown in Fig. 3 and performs D2D communication, there are communications partners in the cell A and also in the cell B. Thus, it becomes necessary that the user apparatus UE performs D2D communication with a user apparatus UE in the cell B by synchronizing with a synchronization signal of the cell B in addition to performing D2D communication synchronized with the cell A. Also, in the process of move to the cell B, it is necessary to switch to a synchronization signal of the cell B at a proper timing for performing D2D communication in the cell B.

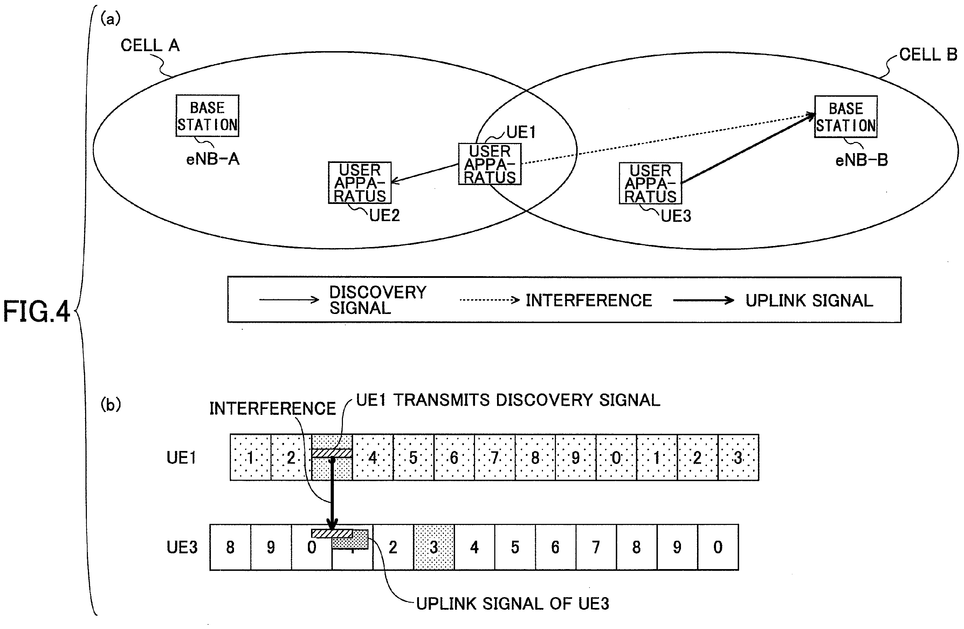

Also, in the inter-cell asynchronous cellular environment, inter-cell interference between a D2D discovery signal and a cellular communication signal may occur. For example, as shown in Fig. 4 (a), (b), in an inter-cell asynchronous environment in which there are a base station eNB-A and a base station eNB-B, a discovery signal transmitted from a user apparatus UE1 existing near a cell edge may become interference to an uplink signal of a user apparatus UE3 located in the cell B. For reducing such an interference, for example, it is necessary to perform proper control, to user apparatuses UE existing near a cell edge, for suppressing transmission of discovery signals in the own cell.

The present invention is contrived in view of the above-mentioned points, and an object of the present invention is to provide a technique for causing a user apparatus UE to properly operate depending on an area where the user apparatus UE exists in an inter-cell asynchronous cellular environment.

### MEANS FOR SOLVING THE PROBLEM

According to an embodiment of the present invention, there is provided a user apparatus as defined by claim 1.

According to an embodiment of the present invention, there is provided a method as defined by claim 2.

### EFFECT OF THE PRESENT INVENTION

According to an embodiment of the present invention, it becomes possible to provide a technique for causing a user apparatus UE to properly operate depending on an area where the user apparatus UE exists in an inter-cell asynchronous cellular environment.

### BRIEF DESCRIPTION OF THE DRAWINGS

Fig. 1 is a diagram for explaining a technique for discovering a user apparatus UE by D2D communication;
Fig. 2 is a diagram showing an example of a discovery resource;
Fig. 3 is a diagram showing a situation in which a user apparatus UE moves from position 1 to position 3;
Fig. 4 is a diagram showing an example of interference in an inter-cell asynchronous environment;
Fig. 5 is a diagram showing a whole configuration example of a radio communication system in an embodiment of the present invention;
Fig. 6 is a diagram showing an outline of a first embodiment;
Fig. 7 is a diagram for explaining an example 1-1;
Fig. 8 is a diagram for explaining an example 1-1;
Fig. 9 is a diagram for explaining an example of a method for transmitting and receiving a discovery signal with a neighbor cell;
Fig. 10 is a diagram for explaining an example of a method for transmitting and receiving a discovery signal with a neighbor cell;
Fig. 11 is a diagram for explaining an example of a method for transmitting and receiving a discovery signal with a neighbor cell;
Fig. 12 is a diagram for explaining an example 1-2;
Fig. 13 is a diagram for explaining an example 1-2;
Fig. 14 is a diagram showing an outline of a second embodiment;
Fig. 15 is a diagram for explaining an example 2-1;
Fig. 16 is a diagram for explaining an example 2-1;
Fig. 17 is a diagram for explaining an example 2-2;
Fig. 18 is a diagram for explaining an example 2-2;
Fig. 19 is a configuration example of a user apparatus UE in the first and the second embodiments;
Fig. 20 is a configuration example of a base station eNB in the first and the second embodiments;
Fig. 21 is a diagram for explaining an example 3-1;
Fig. 22 is a diagram for explaining an example 3-1;
Fig. 23 is a diagram for explaining an example 3-2;
Fig. 24 is a configuration example of a base station eNB in a third embodiment.

### EMBODIMENTS FOR CARRYING OUT THE INVENTION

In the following, embodiments of the present invention are described with reference to figures. The embodiments described below are merely examples, and the embodiments to which the present invention is applied are not limited to the embodiments below. The radio communication system in the present embodiment includes functions complying with LTE (including LTE-Advanced). But, the communication scheme to which the present invention can be applied is not limited to LTE, and the present invention can be applied other communication schemes.

### (Outline of embodiment)

In the present embodiment, control is performed such that behavior of a user apparatus UE is changed depending on whether the user apparatus UE exists in a cell-center area or not, exists in a cell edge area or not, or the like. In the present embodiment, a condition (determination criterion) based on which a user apparatus UE changes the behavior is set. The condition is, for example, to perform predetermined behavior based on a result of comparison between a strength (received power) of a synchronization signal and a threshold. Also, the condition and the behavior of the user apparatus UE when the condition is met can be controlled by a control signal from a base station eNB.

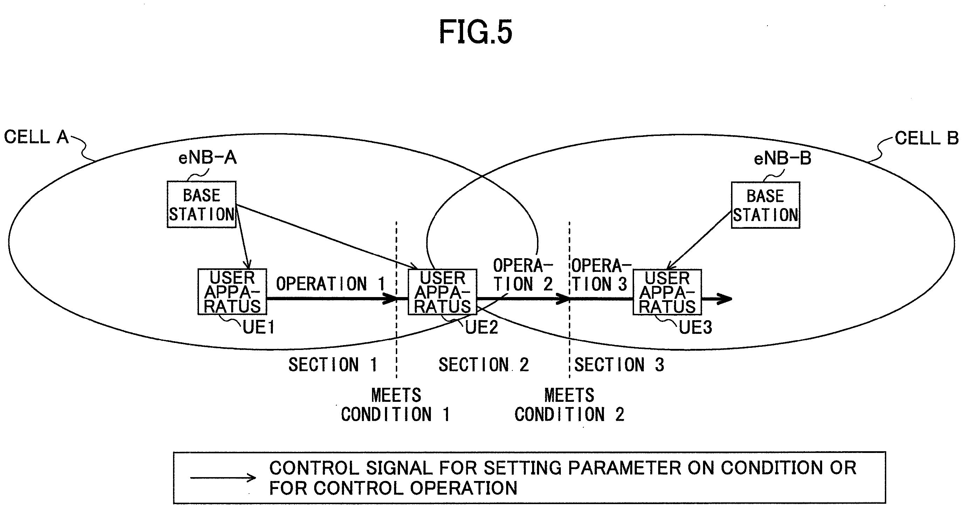

Fig. 5 shows a system whole configuration example in a radio communication system (common to first, second and third embodiments) of the present embodiment. As shown in Fig. 5, in the present embodiment, it is assumed that a user apparatus UE moves in an environment (which is asynchronous) in which a base station eNB-A and a base station eNB-B exist.

Outline of the present embodiment is described with reference to Fig. 5. In the present embodiment, for example, a user apparatus UE which is located in a center area of the cell A receives a control signal for setting conditions (condition 1 and condition 2 in the example of Fig. 5). The user apparatus UE moves to a direction of the cell B. In a section 1 shown in Fig. 5, when the condition 1 is not satisfied, the user apparatus UE performs corresponding behavior 1. The condition 1 is met during the move, and in a section 2 after that, the user apparatus UE performs behavior 2 corresponding to a case where condition 1 is met. Then, in a section 3 after condition 2 is met, the user apparatus UE performs behavior 3 corresponding to the case where the condition 2 is met.

In the following, as more concrete embodiments of the present embodiment, a first embodiment, a second embodiment, and a third embodiment are described.

### (First embodiment)

In the first embodiment, a condition is defined for performing switching of a synchronization signal and the like, and when the condition is met, the user apparatus UE performs operation which is predetermined as operation to be performed when the condition is met.

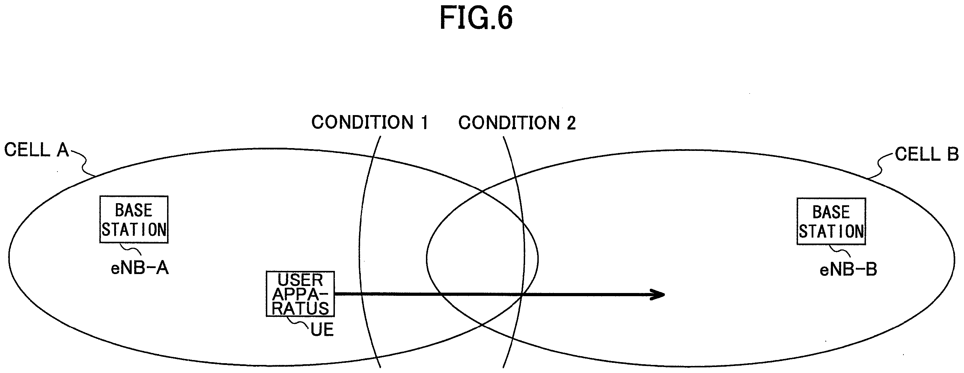

More specifically, in the present embodiment, as shown in Fig. 6, a condition 1 for starting search of a synchronization signal of another cell which is not the cell (base station eNB) with which the user apparatus UE is synchronized, and a condition 2 for switching to synchronization using the other synchronization signal are defined.

In the present embodiment, the synchronization signal is used for accurately recognizing a predetermined period (subframe and the like) which is defined in the system for performing D2D communication, for example. For example, in a case where subframe 3 is determined as a period for transmitting and receiving a discovery signal in the whole system, each user apparatus UE ascertains a time position of the subframe 3 of the cell based on a synchronization signal received from the connecting cell, and performs operation of transmission and reception of a discovery signal when it becomes subframe 3.

In the present embodiment, basically, the user apparatus UE measures a downlink signal (to be referred to as measurement target signal) received from the base station eNB to obtain a measurement value. Then, the measurement value is compared with a threshold, it is determined whether a condition is satisfied according to the comparison result, so that operation of the user apparatus UE is controlled according to the determination result.

In order to perform such control, for example, a type of measurement target signal, a type of measurement value (measurement content of the measurement target signal), threshold, content of condition (such as "threshold>measurement value") are defined for each of the condition 1 and the condition 2.

The measurement target signal is a downlink signal received from a base station eNB (connecting base station eNB and / or neighbor base station eNB). The downlink signal is, for example, PSS/SSS, PRS, CSI-RS, CRS and the like. The downlink signal may be the above-mentioned synchronization signal. Also, the measurement target signal may be an uplink signal, a discovery signal and the like, each transmitted from a user apparatus UE of the own cell or a neighbor cell.

The measurement value is a received signal power, received signal quality and the like. More specifically, the measurement value is, for example, RSRP, RSRQ, RSSI and the like. Also, for example, in a case where the measurement target signal is an uplink signal, a discovery signal and the like transmitted from a user apparatus UE of a neighbor cell, the measurement value may be a value of interference amount exerted on the own cell by the uplink signal and the like, or may be a value representing congestion degree of discovery signals.

As to content of conditions, for example, in the condition 1, in a case where the type of the measurement value is the received signal power, when the measurement value is less than a predetermined threshold, it is determined that the condition 1 is met.

As for the condition 2, in the present embodiment, measurement target signals are determined as a synchronization signal (to be referred to as current synchronization signal) which is being used for synchronization operation, and another synchronization signal obtained by synchronization signal search after the condition 1 is met. Then, for example, by comparing a difference between a measurement value of the current synchronization signal and a measurement value of the other synchronization signal with a threshold, it is determined whether the condition 2 is met. For example, it is determined that the condition 2 is met when the received signal power of the other synchronization signal is greater than that of the current synchronization signal by equal to or greater than 3dB.

In the present embodiment, the base station eNB reports, to a user apparatus in an RRC idle state, parameters corresponding to condition 1 and condition 2 by a broadcast signal (broadcast signaling) such as SIB, for example, and transmits, to a user apparatus UE in an RRC connected state, a control signal and the like by RRC signaling, control signaling (PDCCH and the like).

In the following, a concrete example in a case where the user apparatus UE is in an RRC idle state is described as an example 1-1, and a concrete example in a case where the user apparatus UE is in an RRC connected state is described as an example 1-2.

### <Example 1-1>

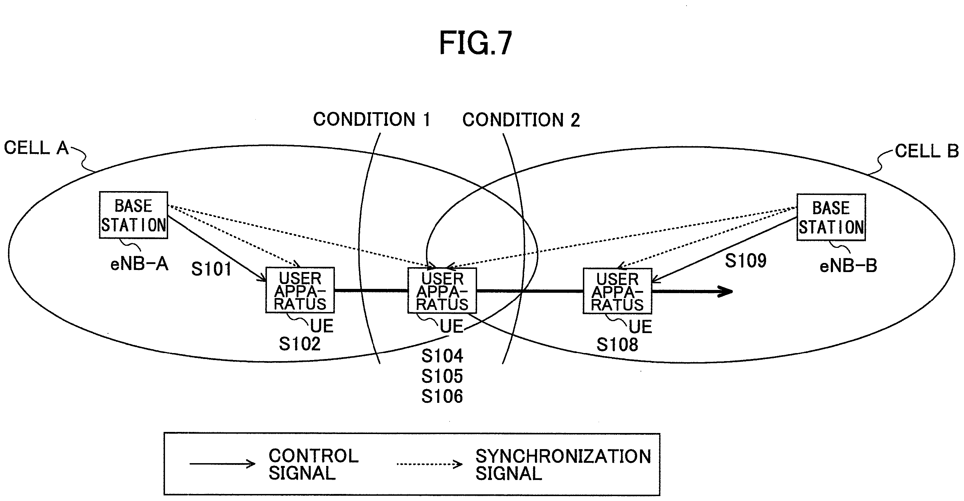

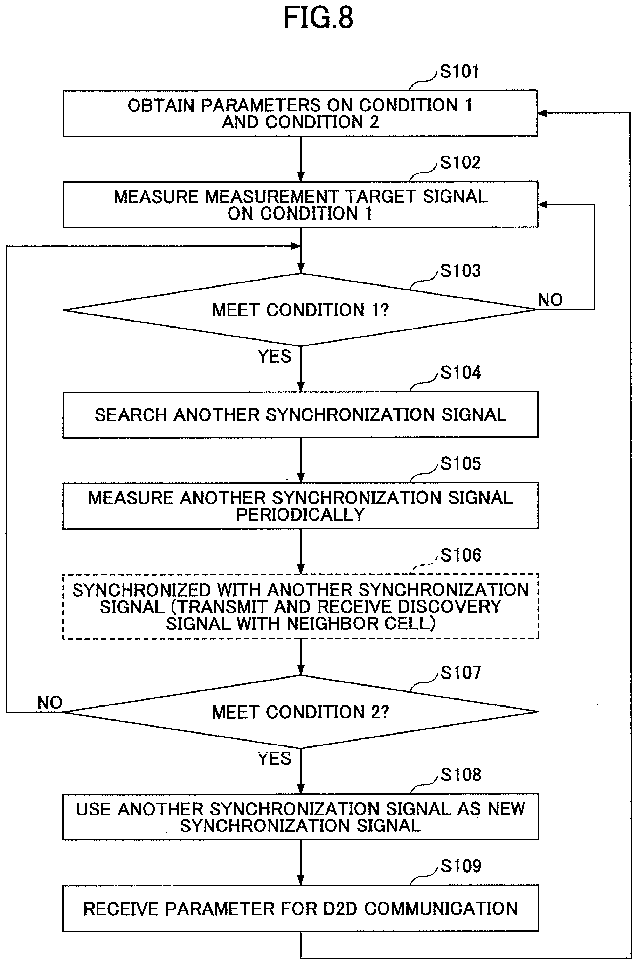

An operation example in a case where the user apparatus UE is in an RRC idle state is described with reference to Fig. 7 and Fig. 8.

In this example, as shown in Fig. 7, operation is described when the user apparatus UE1 moves from a cell A of a base station eNB-A to a cell B of a base station eNB-B. In the following, the example 1-1 is described along the procedure of flowchart shown in Fig. 8. The step numbers shown in Fig. 7 correspond to step numbers shown in Fig. 8.

The user apparatus UE which is located in the cell A obtains parameters on the condition 1 and the condition 2 from the base station eNB (step 101). Here, the base station eNB transmits a downlink signal including the parameters, and the user apparatus UE obtains the parameters by receiving the downlink signal. Although the downlink signal is not limited to a particular type, for example, a signal of RRC signaling, or a broadcast signal (system information) can be used as a signal for parameter transmission. As these signals, exiting signals defined in LTE may be used, or new signals may be defined.

The parameters include, for example, for each of the condition 1 and the condition 2, measurement target signal, measurement content, threshold, and content of condition. However, in a case where measurement target signal, measurement content, and content of condition are predetermined and they are set in the user apparatus UE, the base station eNB may send a threshold for each of the condition 1 and the condition 2 as the parameters.

The user apparatus UE performs measurement of the measurement target signal on the condition 1 (step 102), and determines whether the condition 1 is met based on the measurement value (step 103). Fig. 7 shows an example where the measurement target signal is a synchronization signal. For example, when the condition 1 is a condition of "received power of synchronization signal is equal to or less than threshold 1", the user apparatus UE compares the received power of the synchronization signal with the threshold 1 to determine whether the received power is equal to or less than the threshold 1, and determine whether the condition 1 is met.

According to the determination in step 103, when it is determined that the condition 1 is met, the process goes to step 104, and when the condition 1 is not met, the process from step 102 is repeated. As shown in Fig. 7, in this example, it is assumed that the condition 1 is met when the user apparatus UE is positioned near a boundary between the cell A and the cell B.

In step 104 after the condition 1 is met, the user apparatus UE start searching of another synchronization signal. The search is performed, for example, by blindly detecting another synchronization signal every predetermined period. Also, when the user apparatus UE detects the other synchronization signal, the user apparatus UE measures the other synchronization signal periodically, for example (step 105).

Further, the user apparatus UE may be synchronized with the other synchronization signal based on a predetermined trigger in order to perform discovery signal transmission and reception to and from the neighbor cell B (cross cell discovery), for example (step 106).

### <Example of method of D2D communication between cells>

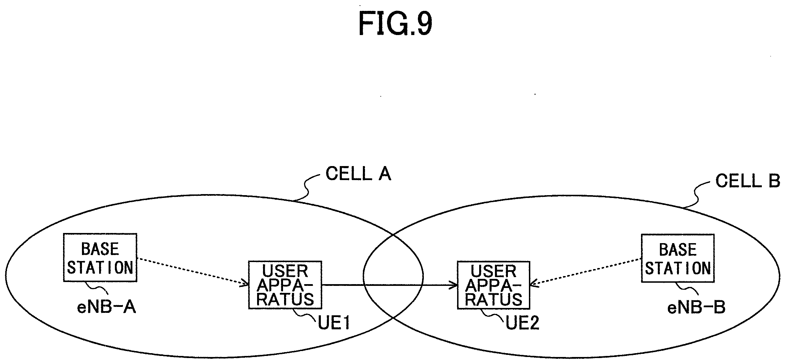

Here, an example of a method of discovery signal transmission and reception with a neighbor cell is described with reference to Figs. 9-11.

As shown in Fig. 9, in an environment (asynchronous) where there are the base station eNB-A and the base station eNB-B, a case is described in which a user apparatus UE1 in a cell A of the base station eNB-A and a user apparatus UE2 in a cell B of the base station eNB-B perform D2D communication.

The user apparatus UE1 in the cell A of the base station eNB-A is synchronized with the base station eNB-A, and the user apparatus UE2 in the cell B of the base station eNB-B is synchronized with the base station eNB-B. However, since the base station eNB-A and the base station eNB-B are not synchronized with each other, the user apparatus UE1 is not synchronized with the user apparatus UE2.

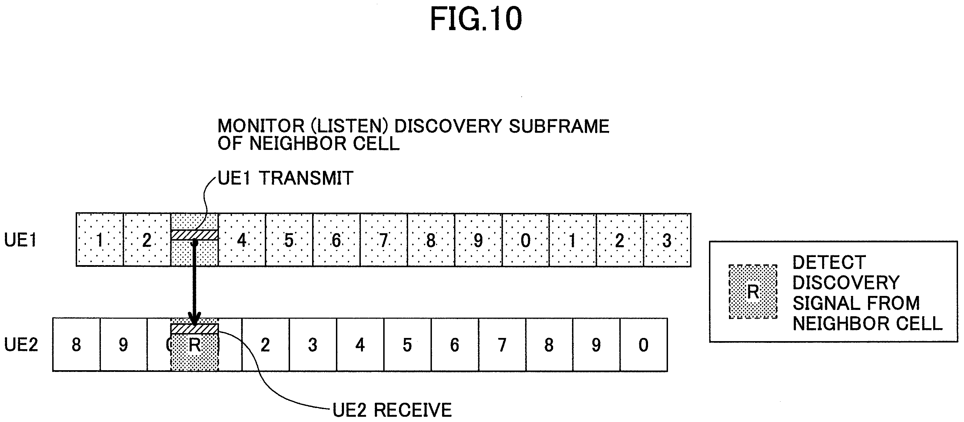

In such an environment, for example, as shown in Fig. 10, the user apparatus UE2 ascertains a time of a discovery period (discovery subframe) in the neighbor cell A (user apparatus UE1), and performs operation for receiving a discovery signal in the period.

For realizing the above-mentioned operation, the user apparatus UE2 determines a (rough) resource range (example: time-frequency range, time range) where a discovery signal from the neighbor cell A may exist.

In the determination here, a signal received from the base station eNB (or a user apparatus UE) in the own cell B is utilized. That is, the base station eNB (or the user apparatus UE) in the own cell B determines a rough (approximate) resource range where a discovery signal from the neighbor cell A may appear, and reports the resource range to the user apparatus UE2 at a timing of itself.

As a concrete method for this, there are two types, for example. In a first method, the base station eNB-B observes a discovery signal transmitted from the neighbor cell A, detects a resource range of discovery signal in the neighbor cell A based on the observation, and reports the information to the user apparatus UE2 under the base station eNB-B.

In a second method, the user apparatus UE at a cell edge of the cell B receives a downlink signal from the base station eNB-A of the neighbor cell A so as to detect a difference of subframe timing between the own cell B and the neighbor cell A and reports the information of the difference to the base station eNB-B of the own cell B. Then, the base station eNB-B reports the information of the difference to the user apparatus UE2 under the base station eNB-B. Accordingly, the user apparatus UE2 can ascertain the range of the discovery period in the neighbor cell.

The user apparatus UE2 to which the resource range where a discovery signal may be transmitted from the neighbor cell A is reported synchronizes with the timing of the neighbor cell A in the range to receive (detect) a discovery signal transmitted from the user apparatus UE1 of the neighbor cell A.

The user apparatus UE2 receives a synchronization signal from the neighbor cell A to synchronize with the neighbor cell A. As concrete methods of this, there are three types, for example. In a first method, the user apparatus UE2 receives a synchronization signal transmitted from the base station eNB-A of the neighbor cell A. In a second method, the user apparatus UE 2 receives a synchronization signal from a user apparatus UE (anchor UE) selected in the neighbor cell A. In a third method, the user apparatus UE2 receives a synchronization signal from the user apparatus UE1 that transmits a discovery signal in the neighbor cell. That is, in this case, the user apparatus UE1 of the neighbor cell A transmits a discovery signal in addition to a synchronization signal.

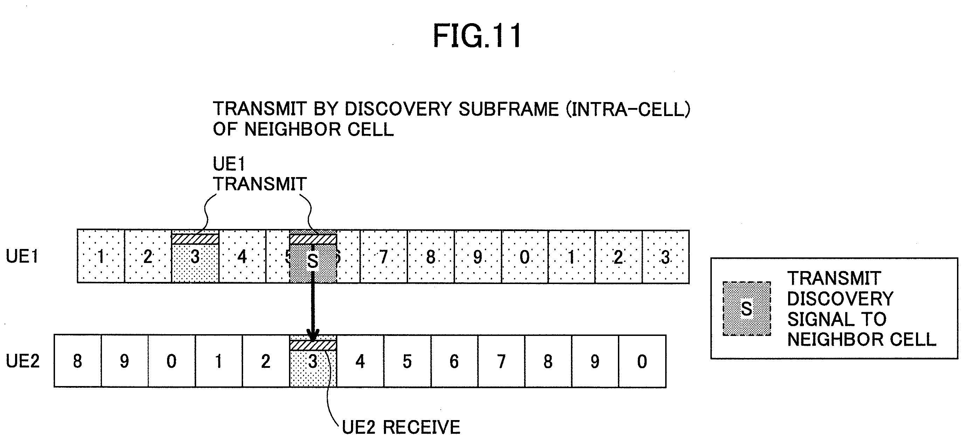

Also, other than the method shown in Fig. 10, as shown in Fig. 11, the user apparatus UE1 may ascertain a time of a discovery period (discovery subframe) in the neighbor cell B (user apparatus UE2) to transmit a discovery signal in the period.

For realizing this operation, the user apparatus UE1 determines a (rough) resource range (example: time-frequency range, time range) where a discovery signal from the neighbor cell B may exist. That is, the user apparatus UE1 determines a resource range where a discovery signal may be detected in the neighbor cell B. The determination method here is the same as the above-mentioned example, and there are a first method and a second method. In the first method, the base station eNB-A observes a discovery signal transmitted from the neighbor cell B, detects a resource range of a discovery signal reception in the neighbor cell B based on the observation, and reports the information to the user apparatus UE1 under the base station eNB-A.

In the second method, the user apparatus UE at a cell edge of the cell A receives a downlink signal from the base station eNB-B of the neighbor cell B so as to detect a difference of subframe timing between the own cell A and the neighbor cell B and reports the information of the difference to the base station eNB-A of the own cell A. Then, the base station eNB-A reports the information of the difference to the user apparatus UE1 under the base station eNB-A. Accordingly, the user apparatus UE1 can ascertain the range of the discovery period in the neighbor cell B.

Accordingly, the user apparatus UE1 to which the resource range where a discovery signal may be detected in the neighbor cell B is reported synchronizes with the timing of the neighbor cell B in the range of period to transmit a discovery signal using a discovery subframe in the neighbor cell B.

The user apparatus UE1 receives a synchronization signal from the neighbor cell B to synchronize with the neighbor cell B. As concrete methods of this, there are two types, for example. In a first method, the user apparatus UE1 receives a synchronization signal transmitted from the base station eNB-B of the neighbor cell B. In a second method, the user apparatus UE1 receives a synchronization signal from a user apparatus UE (anchor UE) selected in the neighbor cell B.

Returning to Figs. 7 and 8, in step 107, the user apparatus UE that performs measurement of another synchronization signal determines whether the condition 2 is met. As described before, for example, it is determined whether the condition 2 is met by comparing, with the threshold, the difference between the measurement value of the current synchronization signal (synchronization signal of cell A) and the measurement value of another synchronization signal (synchronization signal of cell B).

When it is determined that the condition 2 is not met, the process from step 103 is repeated. When it is determined that the condition 2 is met, the process goes to step 108. In step 108, it is determined that the other synchronization signal is used as a new synchronization signal (as a current synchronization signal). Also, as necessary, the user apparatus UE receives a parameter for D2D communication (step 109). The parameter is information of a discovery period in the neighbor cell as described before, for example. After that, the process returns to step 101, and the user apparatus UE performs parameter reception in the cell B.

### <Example 1-2>

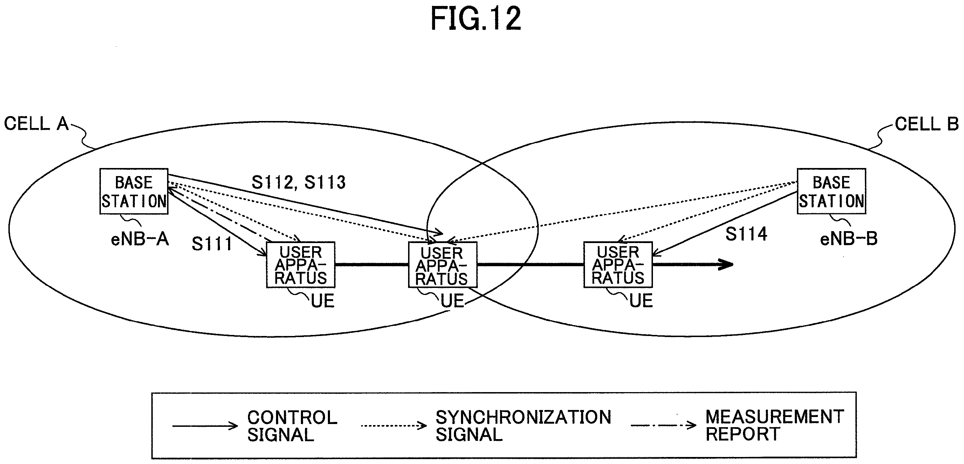

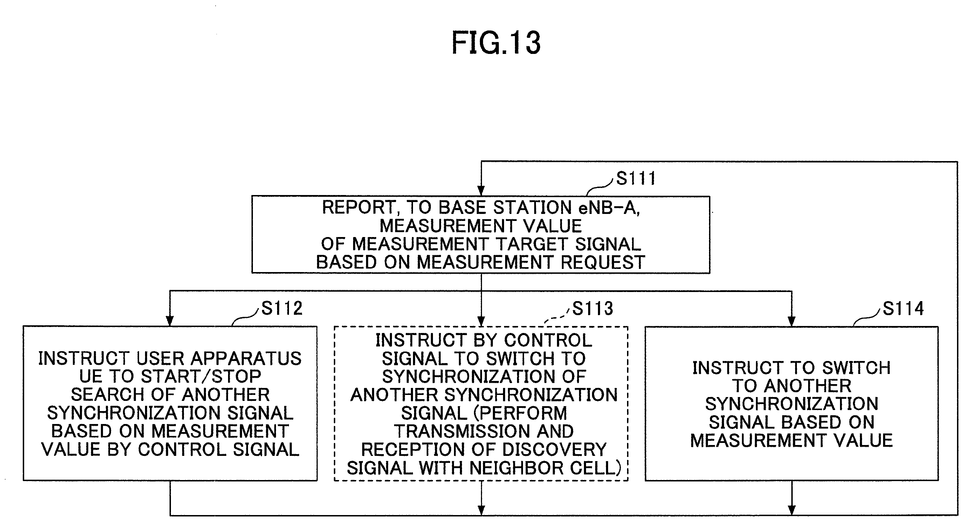

An operation example in a case where the user apparatus UE is in an RRC connected state is described with reference to Fig. 12 and Fig. 13.

In this example, as shown in Fig. 12, operation is described when the user apparatus UE moves from a cell A of a base station eNB-A to a cell B of a base station eNB-B. In the following, the example 1-2 is described along the procedure of flowchart shown in Fig. 13. The step numbers shown in Fig. 13 correspond to step numbers shown in Fig. 12.

When the user apparatus UE is in an RRC connected state, operation of search or switching of synchronization signal performed by the user apparatus UE is controlled from the network (base station eNB). That is, the base station eNB performs comparison with a threshold on the condition (condition 1, condition 2) based on a measurement value received from the user apparatus UE, and when the condition is met, the base station eNB transmits a control signal to the user apparatus UE to cause the user apparatus UE to perform predetermined operation.

First, in step 111, the user apparatus UE receives a control signal (measurement request) from the base station eNB-A, and reports a measurement value of a measurement target signal and the like to the base station eNB-A based on the control signal.

The base station eNB-A performs determination of the condition 1 based on the measurement value received from the user apparatus UE, and instructs, to the user apparatus UE, start, stop or the like of search of another synchronization signal by a control signal (step 112). Also, the base station eNB-A may instruct the user apparatus UE to switch to synchronization of another synchronization signal by a control signal based on the measurement value received from the user apparatus UE in order to perform discovery signal transmission and reception with the neighbor cell, for example (step 113).

Also, in a situation where the user apparatus UE has moved to the side of cell B, the base station eNB-A determines whether the condition 2 is met based on the measurement values of the synchronization signals (synchronization signal of cell A and synchronization signal of cell B) received from the user apparatus UE. When it is determined that the condition 2 is met, the base station eNB-A instructs to switch to another synchronization signal by a control signal (step 114). Also, the user apparatus UE receives various parameters from the base station eNB-B (step 114. The parameters are, for example, information of a discovery period in the neighbor cell A used for discovery signal transmission and reception with the neighbor cell A.

As a control signal transmitted from the base station eNB in the above-mentioned process, an existing downlink signal may be used, or a new downlink signal may be used. The downlink signal is, for example, RRC signaling, (e)PDCCH, PDSCH, broadcast signaling and the like. Also, as an uplink signal for reporting the measurement value by the user apparatus UE, RRC signaling, PUCCH, or PUSCH may be used, for example.

### (Second embodiment)

Next, a second embodiment is described. In the second embodiment, a condition is set for discovery signal transmission and reception with the neighbor cell (cross-cell discovery).

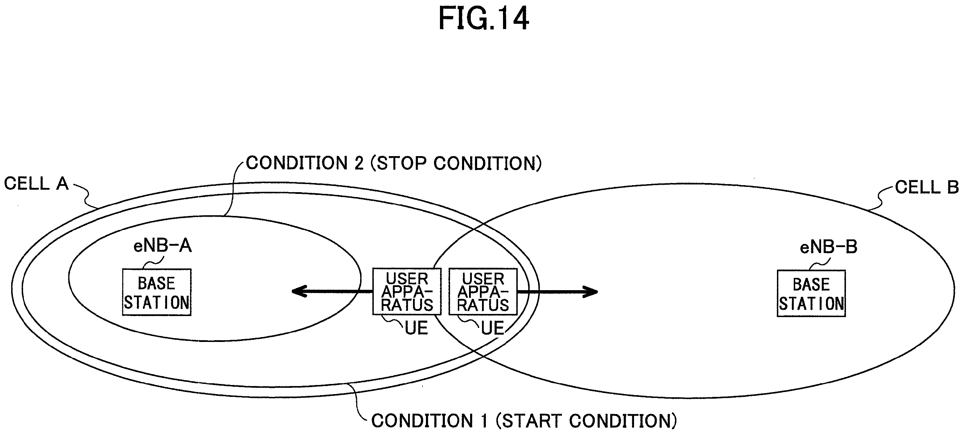

As shown in Fig. 14, in the present embodiment, a condition 1 by which the user apparatus UE in the cell A starts transmission and reception of a discovery signal with a user apparatus UE in the neighbor cell B, and a condition 2 by which the user apparatus UE stops transmission and reception of a discovery signal with a user apparatus UE in the neighbor cell B are defined. As shown in Fig. 14, it is assumed that the condition 1 is met during the user apparatus UE moves toward a cell edge, and it is assumed that the condition 2 is met during the user apparatus UE moves from the cell edge to a cell center side.

Like the first embodiment, a type of measurement target signal, a type of measurement value (measurement content of the measurement target signal), threshold, content of condition (such as "threshold>measurement value") are defined for each of the condition 1 and the condition 2.

The measurement target signal is a downlink signal received from a base station eNB (connecting base station eNB and / or neighbor base station eNB). The downlink signal is, for example, PSS/SSS, PRS, CSI-RS, CRS and the like. The downlink signal may be a synchronization signal. Also, the measurement target signal may be an uplink signal, a discovery signal and the like, each transmitted from a user apparatus UE of the own cell or a neighbor cell.

The measurement value is a received signal power, received signal quality and the like. More specifically, the measurement value is, for example, RSRP, RSRQ, RSSI and the like. Also, for example, in a case where the measurement target signal is an uplink signal, a discovery signal and the like transmitted from a user apparatus UE of a neighbor cell, the measurement value may be a value of interference amount exerted on the own cell by the uplink signal and the like, or may be a value representing congestion degree of discovery signals.

As a concrete example of application of the condition 1, for example, the user apparatus UE performs discovery signal transmission and reception with the neighbor cell when the received power of a synchronization signal from the neighbor base station eNB is greater than a predetermined threshold, and a received power of a synchronization signal from the residing base station eNB is less than a predetermined threshold. Also, as a concrete example of application of the condition 1, for example, the user apparatus UE may perform discovery signal transmission and reception with the neighbor cell when the received power of a synchronization signal from the neighbor base station eNB is greater than a predetermined threshold.

As a concrete example of application of the condition 2, for example, the user apparatus UE stops discovery signal transmission and reception with the neighbor cell when the received power of a synchronization signal from the neighbor base station eNB is less than a predetermined threshold, and a received power of a synchronization signal from the residing base station eNB is greater than a predetermined threshold. Also, as a concrete example of application of the condition 2, for example, the user apparatus UE may stop discovery signal transmission and reception with the neighbor cell when the received power of a synchronization signal from the neighbor base station eNB is less than a predetermined threshold.

In order to avoid ping-pong effect in which operation of start/stop is repeated frequently, hystereses, offset, and trigger time may be provided as a part (parameter) of the condition.

In the present embodiment, the base station eNB reports, to a user apparatus UE in an RRC idle state, parameters corresponding to condition 1 and condition 2 by a broadcast signal (broadcast signaling) such as SIB, for example, and transmits, to a user apparatus UE in an RRC connected state, a control signal and the like by RRC signaling, control signaling (PDCCH and the like).

In the following, a concrete example in a case where the user apparatus UE is in an RRC idle state is described as an example 2-1, and a concrete example in a case where the user apparatus UE is in an RRC connected state is described as an example 2-2.

### <Example 2-1>

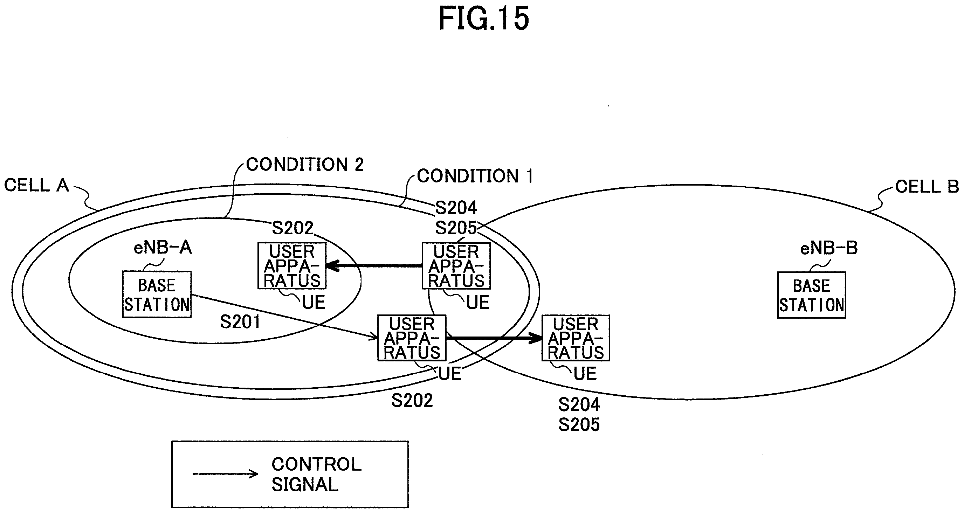

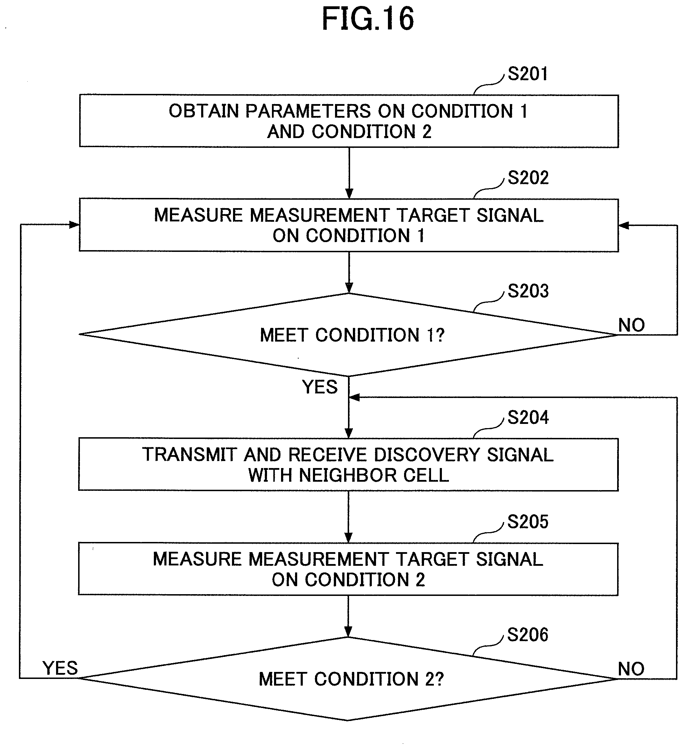

An operation example in a case where the user apparatus UE is in an RRC idle state is described with reference to Fig. 15 and Fig. 16.

Fig. 15 shows a situation in which the user apparatus UE moves from a position near the cell edge of the cell A of the base station eNB-A toward the cell B side, and a situation in which the user apparatus UE moves from a position near the cell edge of the cell A toward a center side of cell A.

In the following, the example 2-1 is described along the procedure of flowchart shown in Fig. 16. The step numbers shown in Fig. 15 correspond to step numbers shown in Fig. 16.

The user apparatus UE obtains parameters on the condition 1 and the condition 2 from the base station eNB-A (step 201). Here, the base station eNB-A transmits a downlink signal including the parameters, and the user apparatus UE obtains the parameters by receiving the downlink signal. Although the downlink signal is not limited to a particular type, for example, a signal of RRC signaling, or a broadcast signal (system information) can be used as a signal for parameter transmission. As these signals, exiting signals defined in LTE may be used, or new signals may be defined.

The parameters include, for example, for each of the condition 1 and the condition 2, measurement target signal, measurement content, threshold, and content of condition. However, in a case where measurement target signal, measurement content, and content of condition and the like are predetermined and they are set in the user apparatus UE, the base station eNB-A may send a threshold for each of the condition 1 and the condition 2 as the parameters.

The user apparatus UE performs measurement of the measurement target signal on the condition 1 (step 202), and determines whether the condition 1 is met based on the measurement value (step 203).

According to the determination in step 203, when it is determined that the condition 1 is met, the process goes to step 204, and when the condition 1 is not met, the process from step 202 is repeated. As shown in Fig. 15, in this example, it is assumed that the condition 1 is met when the user apparatus UE moves from the side of cell A to an area which is a cell edge of cell A and a cell edge of cell B.

In step 204 after the condition 1 is met, the user apparatus UE performs transmission and reception of a discovery signal in the cell A, and by the before-mentioned method, the user apparatus UE performs transmission and reception of a discovery signal with the neighbor cell B (step 204).

Also, the user apparatus UE performs measurement of the measurement target signal on condition 2 (step 205), obtains a measurement value, and determines whether the condition 2 is met (step 206). When it is determined that the condition 2 is not met, the process from step 203 is repeated. When it is determined that the condition 2 is met, discovery signal transmission and reception with the neighbor cell is stopped, and the process returns to step 202. In this example, for example, it is assumed that the condition 2 is met when the user apparatus UE that is performing discovery signal transmission and reception with the neighbor cell B due to satisfaction of the condition 1 moves to the center side of the cell A.

### <Example 2-2>

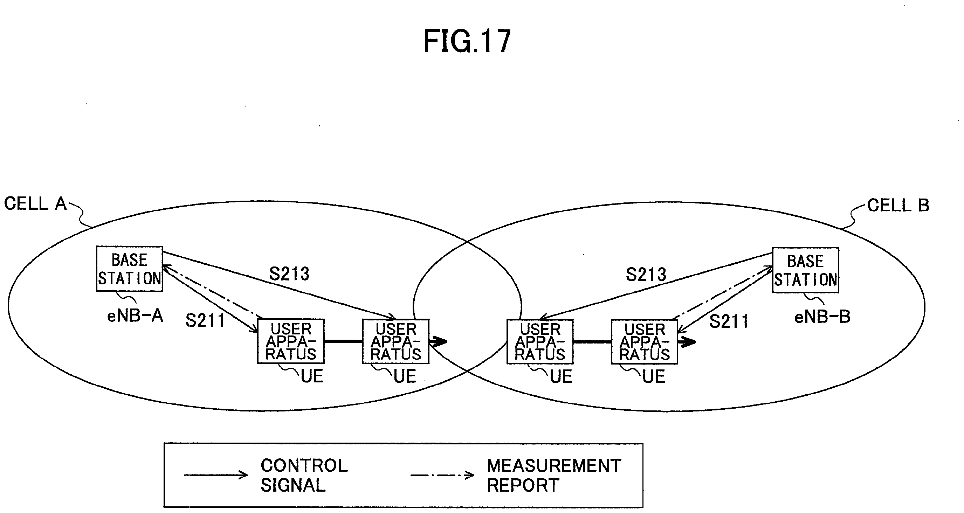

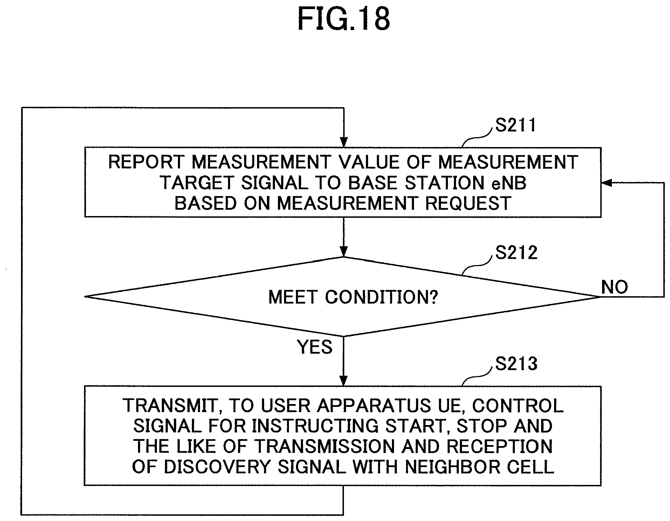

An operation example in a case where the user apparatus UE is in an RRC connected state is described with reference to Fig. 17 and Fig. 18.

When the user apparatus UE is in an RRC connected state, operation of the user apparatus UE is controlled from the network (base station eNB). That is, in the example described below, in the example describe below, since the base station eNB-A and the base station eNB-B operate similarly, the base station eNB-A and the base station eNB-B are not distinguished and they are indicated as "base station eNB". The step numbers shown in Fig. 17 corresponds to the step numbers of Fig. 18.

In step 211, the user apparatus UE receives a control signal from the base station eNB, and performs measurement based on the control signal to report, to the base station eNB, a measurement value (example: received power of synchronization signal from the connecting base station eNB and received power of synchronization signal from the neighbor base station eNB).

The base station eNB determines whether a condition (condition 1, condition 2) of start, stop and the like of discovery signal transmission and reception with the neighbor cell based on the measurement value received from the user apparatus UE (step 212). When it is determined that the condition is met, the process goes to step 213, and when it is determined that the condition is not met, the process from step 211 is repeated.

In step 213 in a case where the condition is met, the base station eNB transmits, to the user apparatus UE, a control signal for instructing start/stop and the like of discovery signal transmission and reception to and from the neighbor cell. That is, when the condition 1 is met, start of discovery signal transmission and reception with the neighbor cell is instructed, and when the condition 2 is met after the condition 1 is met, stop of discovery signal transmission and reception with the neighbor cell is instructed.

As a control signal transmitted from the base station eNB to the user apparatus UE in the above-mentioned process, an existing downlink signal may be used, or a new downlink signal may be used. The downlink signal is, for example, RRC signaling, (e)PDCCH, PDSCH, broadcast signaling and the like. Also, as an uplink signal for reporting the measurement value by the user apparatus UE, RRC signaling, PUCCH, or PUSCH may be used, for example.

### (Apparatus configuration example in first and second embodiments)

In the following, an apparatus configuration common to the first and the second embodiments are described. Each apparatus described in the following can execute operation of all examples described in the first and the second embodiments. Also, the configuration described below may be applied to the third embodiment. In this case, as to the base station eNB, the base station eNB is configured by adding functions corresponding to operation of the third embodiment to functions described below.

### <Configuration example of user apparatus UE>

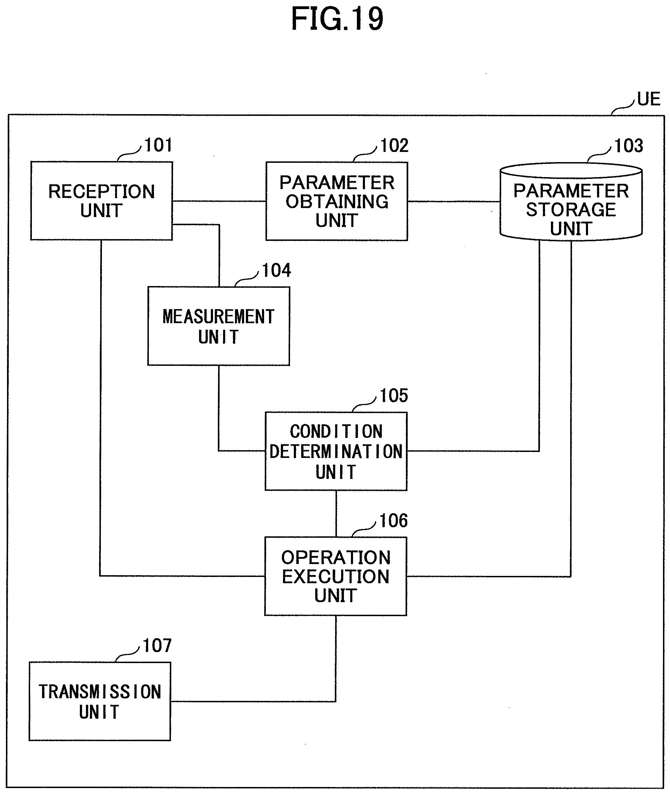

First, the user apparatus UE is described. As shown in Fig. 19, the user apparatus UE includes a reception unit 101, a parameter obtaining unit 102, a parameter storage unit 103, a measurement unit 104, a condition determination unit 105, an operation execution unit 106, and a transmission unit 107.

The reception unit 101 receives a downlink signal (measurement target signal, signal for instructing measurement, control signal including parameters, and the like) from the base station eNB. The parameter obtaining unit 102 obtains parameters (threshold and the like) on the condition 1 and the condition 2 from the control signal received from the base station eNB, and stores the parameters in the parameter storage unit 103. The measurement unit 104 measures the measurement target signal received from the base station eNB, and obtains a measurement value. The condition determination unit 105 determines whether the condition (condition 1, condition2) is met based on the parameter stored in the parameter storage unit 103 and the measurement value obtained by the measurement unit 104.

The determination result is reported to the operation execution unit 106, and the operation execution unit 106 performs operation based on the determination result. For example, in the example 1-1, when it is determined that the condition 1 is met, the operation execution unit 106 starts operation of searching another synchronization signal. For example, in the example 2-1, when it is determined that the condition 1 is met, the operation execution unit 106 executes operation of transmitting and receiving a discovery signal to and from the neighbor cell.

The transmission unit 107 performs transmission of various signals such as a discovery signal, a control signal and the like. For example, in the example 1-2, the transmission unit 107 transmits a control signal including a measurement value to the base station eNB.

### <Configuration example of base station eNB>

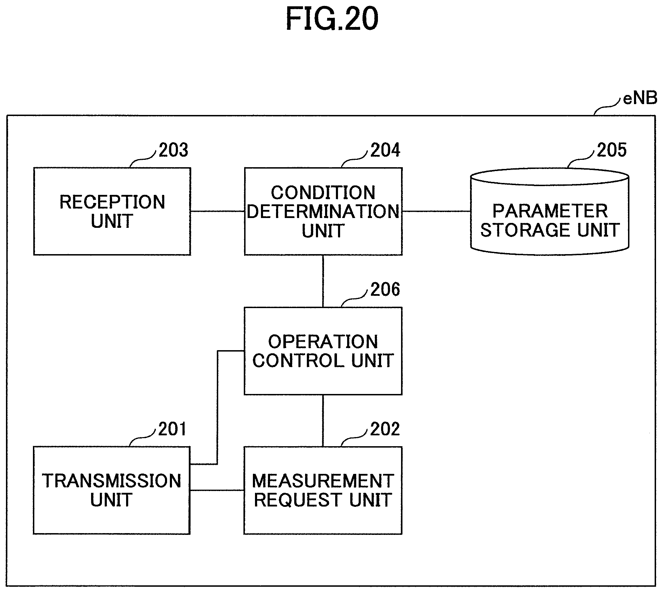

Next, the base station eNB is described. As described in Fig. 20, the base station eNB includes a transmission unit 201, a measurement request unit 202, a reception unit 203, a condition determination unit 204, a parameter storage unit 205 and an operation control unit 206.

The transmission unit 201 transmits, to a user apparatus UE, various signals such as a signal of measurement instruction, a control signal including parameters, control signal instructing operation, and the like. The measurement request unit 202 generates a signal for requesting a user apparatus UE to perform measurement, and transmits the signal via the transmission unit 201. The reception unit 203 receives a control signal including a measurement value from the user apparatus UE, and passes the measurement value to the condition determination unit 204.

Parameters such as threshold corresponding to conditions are stored in the parameter storage unit 205, the condition determination unit 204 determines whether the condition is met based on the measurement value and the parameter, and passes a determination result to the operation control unit 206. The operation control unit 206 generates a control signal instructing operation according to the determination result, and transmits the control signal to the user apparatus UE via the transmission unit 201. For example, in the example 2-2, when it is determined that the condition 1 is met, the operation control unit 206 generates a control signal for instructing the user apparatus UE to perform discovery signal transmission and reception with the neighbor cell, and transmits the control signal via the transmission unit 201.

### (Third embodiment)

Next, a third embodiment is described. In the third embodiment, an example of control method for avoiding interference is described. In the following, as an example of controlling inter-cell interference using inter-base station eNB communication, an example 3-1 is described, and an example that does not include adjustment between bases stations eNB is described as an example 3-2.

### <Example 3-1>

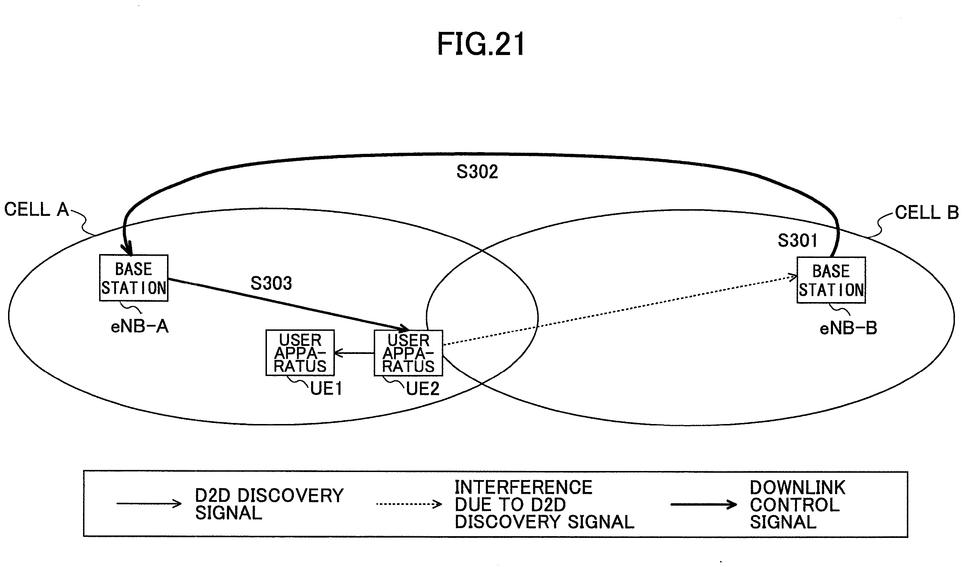

An operation example in the example 3-1 is described with reference to Fig. 21. In the example of Fig. 21, first, the user apparatus UE2 exists near the cell edge of the cell A, and performs transmission and reception of a discovery signal by synchronizing with the cell A. The base station eNB-B in the cell B measures an interference amount, of D2D communication in the neighbor cell A, exerted on the own cell B. For example, the base station eNB-B measures, as the interference amount, received power of the discovery signal transmitted from a user apparatus UE (example: user apparatus UE2) in the cell A, and compares the interference amount with a predetermined threshold (step 301). When the bae station eNB-B detects that the interference amount becomes larger than the predetermined threshold, the base station eNB-B sends a notification to the base station eNB-A to instruct decrease of D2D interference (step 302).

The base station eNB-A that receives the notification changes a related parameter, and transmits a control signal including the changed parameter to the user apparatus UE2 under the base station eNB-A (step 303). The parameter is, for example, the before-mentioned threshold, resource assignment information for discovery signal transmission and reception, and the like. The resource assignment information is, for example, information for assigning a resource that is not assigned in the neighbor cell B to the user apparatus UE2.

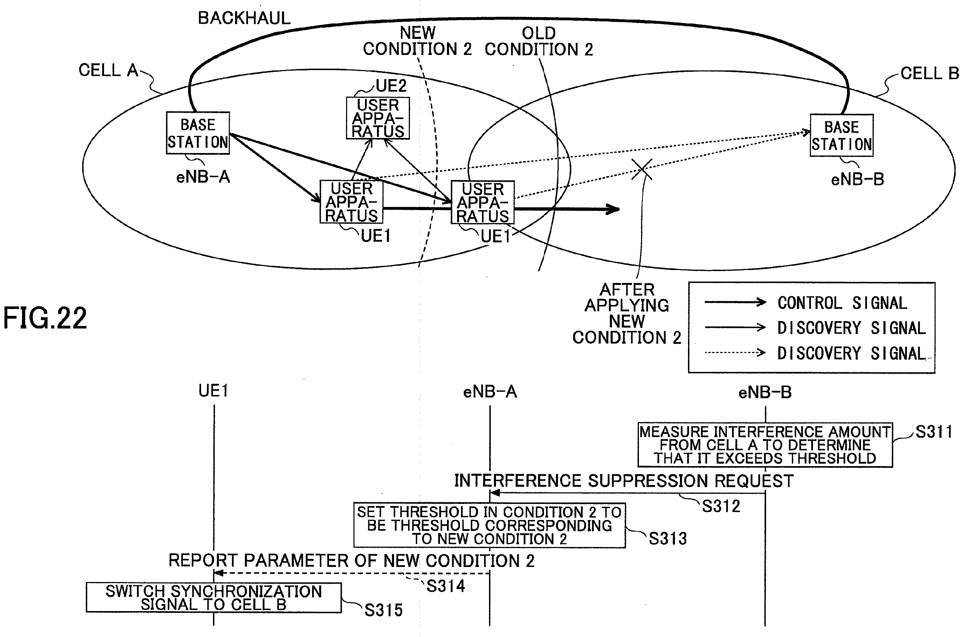

As an example where the parameter is the before-mentioned threshold, an example of adjusting parameter described in the first embodiment for suppressing interference is described with reference to Fig. 22 (upper figure), (lower figure).

In this example, as shown in (upper figure), in the cell A of the base station eNB-A, it is assumed that an old condition 2 is set as a condition 2 for switching synchronization to another synchronization. As shown in (upper figure), in the old condition 2, the user apparatus UE1 of the cell A does not synchronize with the cell B unless the user apparatus UE1 moves to the cell B side from the boundary corresponding to the old condition 2.

Under this premise, when the base station eNB-B measures an interference amount from the cell A to determine that the interference amount exceeds the threshold (step 311), the base station eNB-B transmits an interference suppressing request to the base station eNB-A (step 312). The base station eNB-A that receives the interference suppressing request sets the threshold for the condition 2, for switching synchronization signal, to be a threshold corresponding to the new condition 2 (step 313). Then, the bae station eNB-A transmits a parameter such as the threshold corresponding to the new condition 2 to the user apparatus UE1 (step 314).

The new condition 2 corresponds to the boundary of the new condition 2 shown in (upper figure). In this case, even when the user apparatus UE1 is located closer to the side of the cell A than the old condition 2, the user apparatus UE1 switches synchronization to the cell B side when the user apparatus UE1 is located closer to the cell B side than the new condition 2 (step 315). When the user apparatus UE1 is synchronized with the cell B, the user apparatus UE1 transmits a discovery signal at a timing in cell B. Thus, the signal does not become interference in cell B, so that interference is decreased in the cell B.

### <Example 3-2>

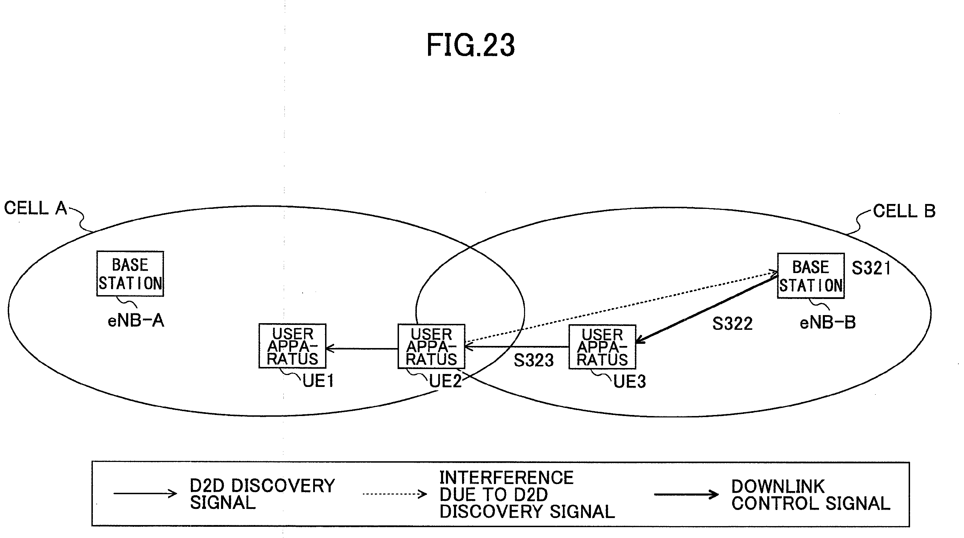

An example 3-2 is described with reference to Fig. 23. Like the example 3-1, the base station eNB-B measures an interference amount by D2D communication from the cell A, and determines that it exceeds a threshold (step 321). Then, the base station eNB-B instructs the user apparatus UE3 under the base station eNB-B to transmit a discovery signal by including "busy" (step 322). The user apparatus UE 3 transmits a discovery signal including "busy" (step 323). The user apparatus UE2 in the cell A that receives the discovery signal including "busy" suppresses transmission of a discovery signal. Accordingly, interference from the cell A to the cell B decreases.

### (Apparatus configuration in the third embodiment)

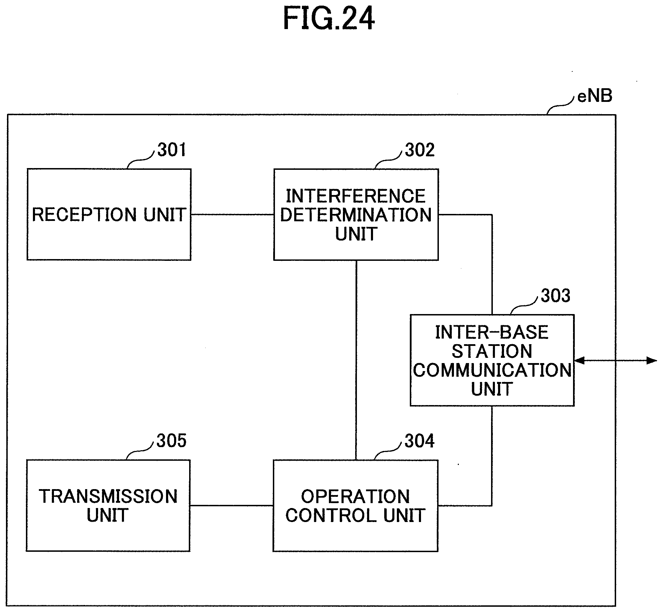

Next, a configuration example of a base station eNB in the third embodiment is described. As shown in Fig. 24, the base station eNB includes a reception unit 301, an interference determination unit 302, an inter-base station communication unit 303, an operation control unit 304, and a transmission unit 305.

The reception unit 301 receives various signals such as a discovery signal from a neighbor cell. The interference determination unit 302 determines, for example, whether received power of a discovery signal from the neighbor cell exceeds a predetermined threshold so as to determine whether to suppress interference due to discovery signal from the neighbor cell. When the interference determination unit 302 determines to suppress interference due to the discovery signal from the neighbor cell, the inter-base station communication unit 303 transmits an interference suppression request to the neighbor base station eNB. Also, the inter-base station communication unit 303 receives an interference suppression request from a neighbor base station eNB.

In the example 3-1, when the operation control unit 304 receives an interference suppression request from a neighbor base station eNB, the operation control unit 304 transmits, to a user apparatus UE under the base station eNB, a control signal for suppressing transmission of discovery signal that becomes interference to the neighbor cell. For example, as described in Fig. 23, the operation control unit 304 adjusts a parameter (threshold) and transmits a control signal for suppressing transmission of the discovery signal near cell edge. Also, in the example 3-2, when the interference determination unit 302 determines to suppress interference due to discovery signal from the neighbor cell, the operation control unit 304 transmits a control signal for instructing the user apparatus UE under the base station eNB to transmit a discovery signal including "busy".

The base station eNB in the third embodiment can be configured by adding the interference determination unit 302 and the inter-base station communication unit 303 to the base station eNB in the first and the second embodiments, and adding functions for performing operation in the third embodiment to the operation control unit 206.

Also, configurations of the user apparatus UE and the base station eNB in the embodiment of the present invention are not limited to configurations described so far, and any apparatus configuration may be adopted as long as it can realize operation described in the embodiment.

For example, according to an embodiment of the present invention, there is provided a user apparatus UE for use in a radio communication system including a base station eNB that forms a cell, including:
an information reception unit configured to receive a parameter on a predetermined condition from a base station eNB of a residing cell;
a condition determination unit configured to perform measurement of a measurement target signal on the predetermined condition, and to determine whether the predetermined condition is met or not based on a measurement value of the measurement target signal and the parameter; and
an operation execution unit configured to perform predetermined operation when it is determined that the predetermined condition is met by the condition determination unit.

As described in the first embodiment, the predetermined condition includes a first condition and a second condition, when it is determined that the first condition is met, the operation execution unit starts search of a synchronization signal that is used for establishing synchronization with another base station different from the base station of the residing cell, and when it is determined that the second condition is met after the first condition is met, the operation execution unit switches synchronization from the base station of the residing cell to the other base station.

As described above, by enabling control of operation for search and switching of a synchronization signal depending on condition, for example, the user apparatus UE can perform discovery signal transmission and reception operation by synchronizing with a proper synchronization signal depending on an area (cell center, cell edge, and the like) where the user apparatus UE exists.

Also, as described in the second embodiment, the predetermined condition includes a first condition and a second condition, when it is determined that the first condition is met, the operation execution unit starts discovery signal transmission and reception of device-to-device communication with a neighbor cell, and when it is determined that the second condition is met after the first condition is met, the operation execution unit stops the discovery signal transmission and reception.

As described above, by enabling control for operation of discovery signal transmission and reception with a neighbor cell depending on condition, for example, the user apparatus UE can properly control whether to perform discovery signal transmission and reception with a neighbor cell depending on an area (cell center, cell edge, and the like) where the user apparatus UE exists.

Also, according to an embodiment of the present invention, there is provided a base station eNB configured to communicate with a user apparatus UE in a radio communication system, including:
a measurement request unit configured to transmit a measurement request for instructing the user apparatus UE to perform measurement of a measurement target signal;
a condition determination unit configured to receive, from the user apparatus UE, a measurement value based on the measurement request, and to determine whether a predetermined condition is met based on the measurement value and a parameter on the predetermined condition; and
an operation control unit configured, when it is determined that the predetermined condition is met by the condition determination unit, to transmit, to the user apparatus UE, a control signal for causing the user apparatus UE to execute predetermined operation.

As described in the first embodiment, the predetermined condition includes a first condition and a second condition, when it is determined that the first condition is met, the operation control unit transmits, to the user apparatus UE, a control signal for causing the user apparatus UE to start search of a synchronization signal used for establishing synchronization with another base station eNB different from the base station eNB, and when it is determined that the second condition is met after the first condition is met, the operation control unit transmits, to the user apparatus UE, a control signal for causing the user apparatus UE to switch synchronization from the base station eNB to the other base station.

As described above, by enabling control of operation for search and switching of a synchronization signal depending on condition, for example, the user apparatus UE can perform discovery signal transmission and reception operation by synchronizing with a proper synchronization signal depending on an area (cell center, cell edge, and the like) where the user apparatus UE exists.

Also, as described in the second embodiment, the predetermined condition includes a first condition and a second condition, when it is determined that the first condition is met, the operation control unit transmits, to the user apparatus UE, a control signal for causing the user apparatus UE to start discovery signal transmission and reception of device-to-device communication with a neighbor cell, and when it is determined that the second condition is met after the first condition is met, the operation control unit transmits, to the user apparatus UE, a control signal for causing the user apparatus UE to stop the discovery signal transmission and reception.

As described above, by enabling control for operation of discovery signal transmission and reception with a neighbor cell depending on condition, for example, the user apparatus UE can properly control whether to perform discovery signal transmission and reception with a neighbor cell depending on an area (cell center, cell edge, and the like) where the user apparatus UE exists.

Also, as described in the third embodiment (example 3-1), the base station eNB further includes:
an interference determination unit configured to measure an interference amount due to a discovery signal by receiving the discovery signal of device-to-device communication transmitted from a user apparatus UE that is located in a cell of another base station eNB, and to determine whether the interference amount exceeds a predetermined threshold; and
an interference suppression request transmission unit configured, when it is determined that the interference amount exceeds the predetermined threshold, to transmit an interference suppression request to another base station eNB,
wherein, when receiving an interference suppression request from the other base station eNB, the operation control unit transmits, to a user apparatus UE located in the base station, a control signal for suppressing transmission of a discovery signal that causes interference to another cell.

Also, as described in the third embodiment (example 3-2), the base station eNB further includes:
an interference determination unit configured to measure an interference amount due to a discovery signal by receiving the discovery signal of device-to-device communication transmitted from a user apparatus UE that is located in a cell of another base station, and to determine whether the interference amount exceeds a predetermined threshold; and
wherein, when it is determined that the interference amount exceeds the predetermined threshold, the operation control unit transmits, to a user apparatus UE located in the base station, a control signal for causing the user apparatus UE to transmit a discovery signal including information (example: before-mentioned identification information indicating "busy") indicating that there is interference from a neighbor cell.

As describe above, by measuring an interference amount based on a discovery signal of device-to-device communication transmitted from a user apparatus UE that is located in a cell of another base station eNB, and by performing control for suppressing interference when the interference amount is large, it becomes possible to reduce interference from a neighbor cell.

### (Effect of embodiment)

As described above, according to an embodiment of the present invention, it becomes possible to provide a technique for causing a user apparatus UE to properly operate depending on an area (position) where the user apparatus UE exists in an inter-cell asynchronous cellular environment.

In the above, the present invention has been explained while referring to the specific embodiments. However, the disclosed invention is not limited to the embodiments. Those skilled in the art will conceive of various modified examples, corrected examples, alternative examples, substituted examples, and the like. While specific numerical value examples are used to facilitate understanding of the present invention, such numerical values are merely examples, and any appropriate value may be used unless specified otherwise. Classification into each item in the description is not essential in the present invention, and features described in two or more items may be combined and used as necessary. Subject matter described in an item may be applied to subject matter described in another item (provided that they do not contradict).

It is not always true that the boundaries of the functional units or the processing units in the functional block diagram correspond to boundaries of physical components. The operations by the plural functional units may be physically performed by a single component. Alternatively, the operations by the single functional unit may be physically performed by plural components.

For convenience of explanation, the user apparatus UE and the base station eNB have been explained by using functional block diagrams. However, such apparatus may be implemented in hardware, software, or a combination thereof. The software that operates according to the present invention, that is, each of software executed by a processor provided in the user apparatus UE, and software executed by a processor provided in the base station eNB may be stored in any proper storage medium such as a RAM (Random Access Memory), a flash memory, a ROM (Read Only Memory), an EPROM, an EEPROM, a register, a hard disk (HDD), a removable disk, a CD-ROM, a database, a server and the like.

The present invention is not limited to the above-mentioned embodiment and is intended to include various variations, modifications, alterations, substitutions and so on without departing from the scope of the present invention.

### DESCRIPTION OF REFERENCE SIGNS

- UE: user apparatus
- eNB: base station
- 101: reception unit
- 102: parameter obtaining unit
- 103: parameter storage unit
- 104: measurement unit
- 105: condition determination unit
- 106: operation execution unit
- 107: transmission unit
- 201: transmission unit
- 202: measurement request unit
- 203: reception unit
- 204: condition determination unit
- 205: parameter storage unit
- 206: operation control unit
- 301: reception unit
- 302: interference determination unit
- 303: inter-base station communication unit
- 304: operation control unit
- 305: transmission unit

## Claims

1. A user apparatus configured to perform terminal-to-terminal communication for use in a radio communication system including a base station (eNB-A) that forms a cell, including:
a reception unit (101) configured to receive a measurement target signal from the base station;
a parameter obtaining unit (102) configured to receive a predetermined threshold as a parameter from a base station of a residing cell;
a measurement unit (104) configured to measure the measurement target signal to obtain a measurement value;
a condition determination unit (105) configured to determine whether the measurement value of the measurement target signal is less than the predetermined threshold; and
an operation execution unit (106) configured to transmit a synchronization signal and a discovery signal to another user apparatus (UE2) in a neighbor cell (eNB-B), when it is determined that the measurement value is less than the predetermined threshold by the condition determination unit (105) .

2. An operation control method of terminal-to-terminal communication executed by a user apparatus for use in a radio communication system including a base station that forms a cell, including:
a measurement signal reception step of receiving a measurement target signal from the base station;
a parameter obtaining step (S101) of receiving a predetermined threshold as a parameter from a base station of a residing cell;
a measuring step (S102) of performing measurement of a measurement target signal to obtain a measurement value;
a condition determination step (S103) of determining whether a measurement value of the measurement target signal is less than the predetermined threshold; and
an operation execution step of transmitting a synchronization signal and a discovery signal to another user apparatus (UE2) in the neighbor cell (eNB-B), when it is determined that the measurement value is less than the predetermined threshold by the condition determination step.

## Patentansprüche

1. Nutzereinrichtung, die dazu konfiguriert ist, Endgeräte-zu-Endgeräte-Kommunikation durchzuführen, zur Verwendung in einem Funkkommunikationssystem, das eine Basisstation (eNB-A) einschließt, die eine Zelle bildet, einschließlich:
einer Empfangseinheit (101), die dazu konfiguriert ist, ein Messzielsignal von der Basisstation zu empfangen;
einer Parametergewinnungseinheit (102), die dazu konfiguriert ist, eine vorbestimmte Schwelle als einen Parameter von einer Basisstation einer vorhandenen Zelle zu empfangen;
eine Messeinheit (104), die dazu konfiguriert ist, das Messzielsignal zu messen, um einen Messwert zu gewinnen;
eine Bedingungsbestimmungseinheit (105), die dazu konfiguriert ist, zu bestimmen, ob der Messwert des Messzielsignals kleiner ist als die vorbestimmte Schwelle; und
eine Betriebsausführungseinheit (106), die dazu konfiguriert ist, ein Synchronisationssignal und ein Erkennungssignal zu einer anderen Nutzereinrichtung (UE2) in einer Nachbarzelle (eNB-B) zu übertragen, wenn von der Bedingungsbestimmungseinheit (105) bestimmt wird, dass der Messwert kleiner ist als die vorbestimmte Schwelle.

2. Betriebssteuerungsverfahren für Endgeräte-zu-Endgeräte-Kommunikation, das von einer Nutzereinrichtung zur Verwendung in einem Funkkommunikationssystem ausgeführt wird, welches eine Basisstation einschließt, die eine Zelle bildet, einschließlich:
eines Messsignalempfangsschritts des Empfangens eines Messzielsignals von der Basisstation;
eines Parametergewinnungsschritts (S101) des Empfangens einer vorbestimmten Schwelle als einen Parameter von einer Basisstation einer vorhandenen Zelle;
eines Messschritts (S102) des Durchführens einer Messung eines Messzielsignals, um einen Messwert zu erhalten;
eines Bedingungsbestimmungsschritts (S103) des Bestimmens, ob ein Messwert des Messzielsignals kleiner ist als die vorbestimmte Schwelle; und
eines Betriebsausführungsschritts des Übertragens eines Synchronisationssignals und eines Erkennungssignals zu einer anderen Nutzereinrichtung (UE2) in der Nachbarzelle (eNB-B), wenn vom Bedingungsbestimmungsschritt bestimmt wird, dass der Messwert kleiner ist als die vorbestimmte Schwelle.

## Revendications

1. Dispositif d'utilisateur configuré pour assurer une communication terminal à terminal pour une utilisation dans un système de radiocommunication incluant une station de base (eNB-A) qui forme une cellule, incluant :
une unité de réception (101) configurée pour recevoir un signal cible de mesure depuis la station de base ;
une unité d'obtention de paramètre (102) configurée pour recevoir un seuil prédéterminé en tant que paramètre d'une station de base d'une cellule résidante ;
une unité de mesure (104) configurée pour mesurer le signal cible de mesure pour obtenir une valeur de mesure ;
une unité de détermination de condition (105) configurée pour déterminer si la valeur de mesure du signal cible de mesure est inférieure au seuil prédéterminé ou pas ; et
une unité d'exécution d'opération (106) configurée pour émettre un signal de synchronisation et un signal de découverte vers un autre dispositif d'utilisateur (UE2) dans une cellule voisine (eNB-B), lorsqu'il est déterminé que la valeur de mesure est inférieure au seuil prédéterminé par l'unité de détermination de condition (105).

2. Procédé de commande d'opération d'une communication terminal à terminal exécuté par un dispositif d'utilisateur pour une utilisation dans un système de radiocommunication incluant une station de base qui forme une cellule, incluant :
une étape de réception de signal de mesure consistant à recevoir un signal cible de mesure depuis la station de base ;
une étape d'obtention de paramètre (S101) consistant à recevoir un seuil prédéterminé en tant que paramètre d'une station de base d'une cellule résidante ;
une étape de mesure (S102) consistant à mesurer un signal cible de mesure pour obtenir une valeur de mesure ;
une étape de détermination de condition (S103) consistant à déterminer si une valeur de mesure du signal cible de mesure est inférieure au seuil prédéterminé ou pas ; et
une étape d'exécution d'opération consistant à émettre un signal de synchronisation et un signal de découverte vers un autre dispositif d'utilisateur (UE2) dans la cellule voisine (eNB-B), lorsqu'il est déterminé que la valeur de mesure est inférieure au seuil prédéterminé par l'étape de détermination de condition.
